Europäisches Patentamt

European Patent Office

Office européen des brevets

(11) Numéro de publication: **0 275 777**
**A1**

## (12) DEMANDE DE BREVET EUROPEEN

(21) Numéro de dépôt: 87402943.2

(22) Date de dépôt: 21.12.87

(51) Int. Cl.⁴: **H01S 3/095** , H01S 3/223

(30) Priorité: 24.12.86 FR 8618173

(43) Date de publication de la demande:
27.07.88 Bulletin 88/30

(84) Etats contractants désignés:
CH DE GB LI NL

(71) Demandeur: **COMMISSARIAT A L'ENERGIE ATOMIQUE**
**31/33, rue de la Fédération**
**F-75015 Paris(FR)**

Demandeur: **CENTRE NATIONAL DE LA RECHERCHE SCIENTIFIQUE**
**15, quai Anatole France**
**F-75007 Paris(FR)**

(72) Inventeur: **Boiveneau, Michel**
**8, Résidence Le Bosquet**
**F-91940 Les Ulis(FR)**
Inventeur: **Jouvet, Christophe**
**21, rue Armand Millet**
**F-92340 Bourg la Reine(FR)**
Inventeur: **Pluzzi, François**
**229, Boulevad de la Vanne**
**F-94230 Cachan(FR)**

(74) Mandataire: **Mongrédien, André et al**
**c/o BREVATOME 25, rue de Ponthieu**
**F-75008 Paris(FR)**

(54) **Procédé et dispositif d'obtention d'un excimère, application au laser.**

(57) Le dispositif comprend une chambre de compression (9), des moyens (11) pour comprimer le mélange gazeux R + XY + M dans la chambre de compression (9), une chambre de détente (3) communiquant par au moins une ouverture (23, 23a) avec la chambre de compression (9), des moyens (25) pour créer dans la chambre de détente (3) une pression inférieure à celle régnant dans la chambre de compression (9), la différence de pression entre les chambres de compression et de détente, la surface de l'ouverture et le volume de la chambre de détente étant tels que le mélange gazeux entrant dans la chambre de détente subisse une détente adiabatique supersonique avec un nombre de Mach au moins égal à 10, et des moyens (27, 29, 27a, 29a) pour produire une décharge électrique (E) dans la chambre de détente (3), en aval (x) de l'ouverture (23, 23a).

FIG. 2

# PROCEDE ET DISPOSITIF D'OBTENTION D'UN EXCIMERE, APPLICATION AU LASER

La présente invention a pour objet un procédé et un dispositif d'obtention d'un excimère utilisable comme source lumineuse, émettant dans l'ultraviolet ou le visible, dans un laser impulsionnel à fort taux de répétition ou dans un laser continu.

Ces applications de l'invention sont celles des lasers en général et plus spécialement celles des lasers de grande puissance et à rendement élevé, utilisables notamment dans les domaines de la photochimie, des télécommunications et de la fusion contrôlée.

Le développement des lasers à gaz ou à excimères dans le domaine des longueurs d'onde ultraviolettes et visibles, a suscité un intérêt considérable pendant ces dix dernières années. Ceci est en partie dû à la grande diversité des longueurs d'onde et à l'étroitesse du domaine spectral des émissions lasers (quelques nm).

Un excimère est une espèce chimique à l'état gazeux, excitée, susceptible, en se désexcitant, de se dissocier chimiquement lors d'une émission lumineuse, cette émission lumineuse correspondant à une transition électronique entre l'état excité de l'excimère et son état fondamental très peu lié (de l'ordre de 100 à 300 cm$^{-1}$ ).

Du fait de la dissociation chimique très rapide de la molécule l'état fondamental, l'inversion de population est facilement réalisable et la section efficace d'émission stimulée présente une valeur élevée ($10^{-16}$ cm$^2$ environ).

Pour une description générale des principes et caractéristiques des lasers à excimères, on peut se reporter par exemple à l'article J.J. EWING intitulé "Excimer Lasers", publié dans Laser handbook édité par M.L. STITCH, North Holland pub. Company, 1979, pp. 135-197.

Dans les lasers à excimères, le milieu actif est constitué d'un mélange gazeux R + XY, où R représente généralement un gaz rare tel que le xénon, l'argon, le krypton, et XY désigne en général une molécule gazeuse di-atomique halogénée telle que $Cl_2$, $F_2$, HCl, HF. Ce milieu actif baigne dans un gaz tampon constitué d'un gaz rare identique ou différent de R.

L'un des réactifs gazeux R ou XY est excité ou ionisé soit par un pompage optique, soit par un bombardement électronique, soit par décharge électrique et la collision du réactif excité avec l'autre partenaire produit un halogénure de gaz rare RY* dans un état excité, précurseur de l'émission laser.

Le produit RY* est formé principalement dans deux états électroniques excités appelés B et C mais l'émission laser correspond à la transition électronique entre le niveau B et le niveau X fondamental. Cette émission laser a lieu principalement à partir du niveau vibronique fondamental de l'état B (v = 0), peuplé par relaxation collisionnelle des états excités de B (v≠0) à l'aide du gaz tampon.

Le mécanisme réactionnel peut être schématisé comme suit :

$$R+XY+M \xrightarrow[\text{électronique}]{\text{bombardement}} \begin{cases} R^*+XY+M \\ R+XY^*+M \\ R^++XY^-+M \end{cases} \xrightarrow{\text{collisions}} RY^*(B,C)+X+M \text{ ——}$$

$$\xrightarrow[\text{collisionnelle}]{\text{relaxation}} RY^*(B,v=0)+X+M \xrightarrow{h\nu} R+Y+X+M,$$

M étant le gaz tampon dans lequel baigne le mélange R + XY.

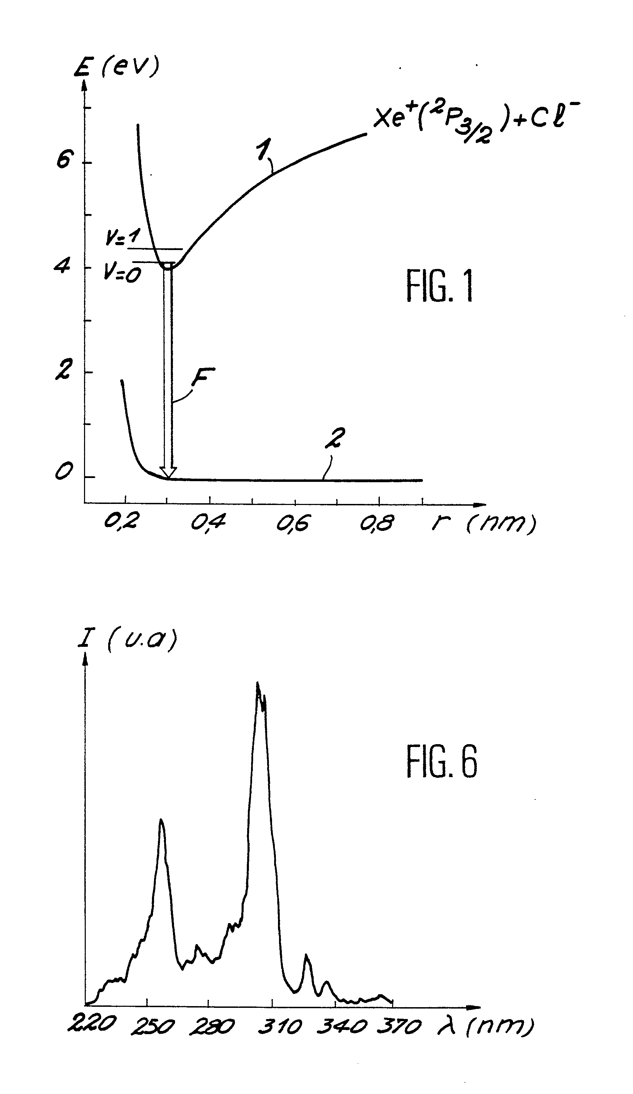

Sur la figure 1, on a représenté les courbes de potentiel de XeCl correspondant à R = Xe et XY = $Cl_2$. Ces courbes, représentatives du mécanisme réactionnel ci-dessus, ont notamment été publiées dans l'article de P.J. HAY et Al, intitulé "The covalent and sonic states of the Xenon halydes" paru dans J. Chem. Phys. 69 de 1978, pp. 2209. Ces courbes donnent l'énergie de liaison E, exprimée en eV, en fonction de la distance de la liaison r de XeCl, exprimée en nm.

La figure 1 donne la courbe de potentiel du système XeCl. L'état excité (courbe 1 ) correspond à l'état Xe$^+$($^2P_{3/2}$) et Cl$^-$. De cette courbe 1, il ressort que l'énergie de liaison de l'excimère XeCl* (B) est inférieure à celles de Xe et de Cl non liés.

La courbe 2 donne l'énergie de liaisons des molécules de xénon et de chlore, à un état non excité.

L'émision de lumière symbolisée par la flèche F est ·due à la désexcitation de l'excimère XeCl* (B,v = 0) qui s'accompagne de la dissociation de ce dernier en atomes de xénon et de chlore à un état non excité (courbe 2). La longueur d'onde de la lumière émise est de 308 nm.

L'un des inconvénients des lasers à excimères actuellement connus est leur faible rendement, de l'ordre de 1% qui est défini par le rapport de l'énergie laser extraite sur l'énergie absorbée par le milieu actif lors du bombardement électronique.

Un autre inconvénient majeur de ces lasers à excimères réside dans la faible régénération du gaz de départ rendant difficile le fonctionnement à haute récurrence et impossible le fonctionnement en régime continu. En particulier, le recyclage du gaz est généralement effectué par des ventilateurs limitant le nombre d'impulsions laser par unité de temps ; le taux de répétition de ces lasers est de l'ordre de 100Hz.

Afin d'augmenter la probabilité de collision entre le réactif excité ($R^*$ par exemple) et l'autre partenaire (XY) et par conséquent d'obtenir des puissances lasers élevées, il est nécessaire que les réactifs aient une haute pression (de l'ordre de $10^4$ Pa). De même, le gaz tampon doit être à une haute pression (de l'ordre de $10^5$ Pa) pour relaxer de façon vibrationnelle les excimères formés.

Malheureusement, la production d'une décharge électrique pour exciter l'un des deux réactifs dans un milieu haute pression ist difficile à contrôler. En outre, les tensions habituellement utilisées pour provoquer cette décharge de manière efficace sont élevées ; elles varient de 25 à 30 kV.

Afin d'obtenir un flux de gaz plus élevé ainsi qu'un renouvellement constant du milieu actif, un laser à écoulement supersonique a été mis au point. Ce dispositif est notamment décrit dans l'article de B. FONTAINE et al., intitulé "Nouveaux lasers supersoniques à très basse température et haute densité", paru dans la revue du CETHEDEC 19, numéro spécial 1982.2, pp. 55-80 et dans l'article "Les lasers à excimères avec écoulement gazeux supersonique" de B. FONTAINE et al., paru dans Entropie n°89-90 de 1979, pp. 118-125.

Dans ce dispositif, l'écoulement supersonique est obtenu avec une tuyère de Laval et la décharge électrique servant à exciter l'un des réactifs R ou XY est stabilisée ou assistée par un faisceau d'électrons ou de rayons X.

Le schéma réactionnel y est identique à celui donné précédemment.

En outre, la densité du gaz (ou pression) dans l'écoulement supersonique doit encore être maintenue élevée afin de favoriser les collisions entre le réactif excité et l'autre réactif, et la relaxation des espèces $RY^*$ (B, C). Malheureusement, le refroidissement du gaz, dû à la détente supersonique, contribue la formation d'agrégats entre les réactifs limitant ainsi la concentration des réactifs disponibles pour former l'excimère $RY^*$.

En particulier, dans le cas d'un mélange réactif Xe + HCl, la formation d'agrégats de $(HCl)_n$ est importante, n étant un entier positif supérieur à 2. L'inconvénient de ces agrégats est notamment décrit dans Appl. Phys. Lett. 36(3) du 1er février 1980 de B. FONTAINE, intitulé "High specific power long-pulse supersonic flow XeCl laser at 308 nm", pp. 185-187.

Les inventeurs ont trouvé que la formation de ces agrégats de $(HCl)_n$ était due à la grande polarité de la molécule de HCl.

D'autres agrégats ou complexes homogènes du type $R_2^+$ ($Xe_2^+$ par exemple) sont aussi produits par l'intermédiaire de réactions ions-molécules dont les sections efficaces sont très élevées dans les conditions de température et de pression de l'écoulement supersonique. Ces deux effets limitent le rendement laser à environ 2,5%.

Dans le laser à écoulement supersonique ci-dessus, le nombre de Mach, définissant la vitesse d'écoulement du gaz, varie de 1 à 3. Ce nombre de Mach est relativement faible afin de permettre les collisions entre les réactifs, nécessaires à l'obtention de l'excimère. En effet, le nombre de collisions par unité de temps p est une fonction décroissante du nombre de Mach : $p \approx M^{-4}$.

En outre, l'utilisation d'un canon à électrons ou d'un générateur de rayons X rend complexes et donc coûteux les lasers à écoulement supersonique connus.

Jusqu'à ce jour, on a toujours cherché à créer des collisions entre les réactifs afin d'obtenir un grand nombre d'excimères et donc le maximum de puissance lumineuse.

Or, contrairement au but recherché dans les articles de B. FONTAINE et al., ci-dessus et contre toute logique, les inventeurs ont fait abstraction des collisions et cherché à augmenter le nombre de complexes de Van der Waals du type R-XY dans le mélange gazeux en augmentant le nombre de Mach de l'écoulement supersonique et en utilisant des mélanges réactionnels formés de molécules faiblement polaires, voire non polaires. En outre, ils ont cherché à exciter directement ces complexes de Van der Waals. Ils ont alors obtenu l'émission de l'excimère de bande spectrale étroite (de l'ordre de 10 nm).

Il est à noter que la formation de complexes de Van der Waals ($Xe-Br_2$, $Xe-Cl_2$) et l'excitation optique de ces complexes a notamment fait l'objet d'une publication intitulée "Formation of the XeBr* excimer by double optical excitation of the Xe-Br₂ Van der Waals complex" de M. BOIVINEAU et al., parue dans J. Chem. Phys. 84(8) du 15 avril 1986, pp. 4712-4713. Mais l'excitation des complexes était réalisée avec un dispositif de pompage optique complexe.

L'invention a justement pour objet un procédé et un dispositif d'obtention d'un excimère permettant de remédier aux inconvénients ci-dessus. En particulier, le dispositif utilisé est relativement simple et peu coûteux, ne nécessitant pas l'emploi d'un canon à électrons ou de pompage optique complexe pour former l'excimère, et il présente un rendement supérieur à ceux obtenus dans l'art antérieur.

L'invention a tout d'abord pour objet un procédé d'obtention d'un excimère apte à se dissocier chimiquement lors de sa désexcitation par une émission de lumière, caractérisé en ce qu'il comprend les étapes suivantes :
- compression d'un mélange gazeux R + XY + M avec R, XY et M identiques ou différents et où R et XY sont choisis parmi un atome de gaz rare, un atome métallique et une molécule polyatomique et M représente un gaz tampon,
- détente adiabatique supersonique du mélange comprimé avec un nombre de Mach au moins égal à 10, entraînant la formation d'un complexe de Van der Waals R-XY baignant dans le gaz tampon, l'énergie de liaison du complexe étant au moins égale à l'énergie de liaison de R-R et de XY-XY, et
- excitation directe du complexe de Van der Waals par une décharge électrique non assistée, conduisant à l'excimère RY*.

L'utilisation pour la détente adiabatique d'un nombre de Mach élevé, au moins égal 10, et donc d'un très bon refroidissement du mélange gazeux (T quelques °K) est essentielle pour parvenir à une grande concentration de complexes R-XY. En outre, ceci permet, compte tenu de la densité (ou pression) de gaz détendu très faible dans la région où se produit la décharge électrique, l'utilisation d'une décharge simple, inférieure à 10 kV, non assistée ou non stabilisée électroniquement ou par rayonnement X, contrairement à l'art antérieur.

Pour des raisons de facilité d'emploi et de faible encombrement du dispositif servant à la mise en oeuvre du procédé de l'invention, la décharge électrique utilisée est de type transverse, c'est-à-dire engendrée perpendiculairement à l'écoulement du mélange gazeux.

Il est très surprenant que l'excitation des complexes RY* par une décharge électrique conduise avec une remarquable spécificité à la formation d'un excimère RY*(B,V≤10). En effet, la décharge électrique n'est pas un processus d'excitation sélectif et beaucoup d'autres produits auraient pu être formés et la réaction menant à l'excimère ne pas se produire.

Le mécanisme réactionnel selon l'invention, simplifié par rapport à celui de l'art antérieur, est - schématisé comme suit :

$$R + XY + M \xrightarrow[\text{supersonique}]{\text{détente}} (R-XY) + M \xrightarrow[\text{électrique}]{\text{décharge}}$$

$$\xrightarrow{\phantom{xxxx}} RY^*(B,V \lesssim 10) + x + M \xrightarrow{\phantom{xx}h\nu\phantom{xx}} R + Y + X + M.$$

Le procédé selon l'invention est applicable à tous les gaz réactifs actuellement connus susceptibles de former un complexe de Van der Waals du type R-XY dont l'énergie de liaison est supérieure ou égale à celle des complexes R-R et XY-YX. Ceci est notamment le cas pour les molécules ou atomes R et XY non polaires ou très faiblement polaires.

Il est à noter que dans les documents de B. FONTAINE ci-dessus, la formation des complexes $(HCl)_n$, néfaste pour un rendement lumineux élevé, était due en partie à la forte polarité de HCl.

L'utilisation conformément à l'invention de molécules ou atomes non polaires permet d'optimiser la formation des complexes ou d'agrégats mixtes du type $R_m-YX_n$, avec m et n des entiers positifs. En particulier, et contrairement à l'art antérieur, les réactions ions-molécules sont peu probables du fait du faible nombre de collisions dans l'écoulement supersonique lors de l'excitation électrique.

En outre, la formation des complexes homogènes du type $R_2$ à l'état fondamental est également peu probable du fait que les complexes mixtes R-XY présentent une énergie de liaison plus élevée donc plus stable. Par exemple l'énergie de liaison de $Xe_2$ est $\simeq 200$ cm⁻¹, l'énergie de $(Cl_2)_2$ est $\simeq 250$ cm⁻¹ et celle du complexe $XeCl_2$ est $\simeq 400$ cm⁻¹.

Le procédé selon l'invention est applicable à un grand nombre de gaz réactifs. En particulier, le réactif R peut être un gaz rare tel que l'argon, le krypton, le xénon, une vapeur métallique et en particulier une vapeur de mercure, de cadmium, de zinc, de tellure, de potassium ou une molécule gazeuse polyatomique peu ou non polaire telle que $COS$, $NF_3$, $CO_2$, $OF_2$, $N_2O$, $O_2$.

Le réactif XY peut aussi être formé d'un gaz rare tel que l'argon, le krypton, le xénon, d'une vapeur métallique telle qu'une vapeur de mercure, de cadmium, de zinc, de potassium, de tellure, etc. ou une molécule gazeuse poly-atomique telle que $COS$, $N_2O$, $O_2$, $COS$, $NF_3$, $OF_2$ et de préférence une molécule polyatomique dont l'un au moins des atomes est un halogène comme par exemple $Cl_2$, $Br_2$, $F_2$, $CH_3X$, $CH_2X_2$ ou $C_2H_5X$ où X représente Cl, Br ou F.

Les couples de gaz R-XY utilisables sont en particulier ceux décrits dans les articles de B. FONTAINE ci-dessus et de J.J. EWING.

Comme gaz tampons, on peut utiliser un gaz rare tel que l'argon, le néon, le krypton, le xénon, l'hélium ou un mélange de ces gaz ou une vapeur métallique telle qu'une vapeur de mercure.

De façon avantageuse, R et M sont des gaz rares et XY représente $Cl_2$, $Br_2$ et $F_2$. En particulier, R représente Xe, XY représente $Cl_2$ et M représente l'hélium ; ceci permet d'obtenir l'excimère XeCl* par excitation directe du complexe Xe-$Cl_2$.

Un autre mélange de gaz préféré est le mercure pour R, $CH_3Cl$ pour XY et l'hélium pour M.

Conformément à l'invention, la compression du mélange gazeux est effectuée à une pression de 1 à 5 MPa et la détente est effectuée jusqu'à une pression inférieure à 135 Pa (1 torr). Ce domaine de pression est impossible à atteindre avec un système classique où les collisions sont nécessaires pour la formation des excimères.

Dans le cas particulier de la formation de l'excimère XeCl*, il est préférable de comprimer le mélange gazeux à environ 2 MPa pour favoriser la formation du complexe de Van der Waals Xe-$Cl_2$ par rapport à d'autres complexes susceptibles de se former.

L'invention a aussi pour objet un dispositif permettant la mise en oeuvre du procédé décrit précédemment.

Conformément à l'invention, ce dispositif comprend une chambre de compression, des moyens pour comprimer le mélange gazeux dans la chambre de compression, une chambre de détente communiquant par au moins une ouverture avec la chambre de compression, des moyens pour créer dans la chambre de détente une pression très inférieure à celle régnant dans la chambre de compression, la différence de pression entre les chambres de compression et de détente, la surface de l'ouverture et le volume de la chambre de compression étant tels que le mélange gazeux entrant dans la chambre de compression subisse une détente adiabatique supersonique avec un nombre de Mach au moins égal à 10, et des moyens pour produire une décharge électrique dans la chambre de détente, en aval de l'ouverture.

Ce dispositif peut, conformément à l'invention, être utilisé comme laser fonctionnant en continu ou en régime impulsionnel avec une fréquence de répétition très élevée (de l'ordre de 1 kHz) contrairement au dispositif de l'art antérieur.

En outre, ce dispositif laser n'est pas nécessairement équipé d'un système d'amplification de la lumière émise par l'excimère du fait de la puissance élevée de cette dernière. Il peut, si nécessaire, être équipé d'un sélecteur en longueur d'onde pour réduire la largeur spectrale de la lumière.

Le dispositif laser selon l'invention peut être utilisé avec tous les gaz réactifs donnés précédemment. Les excimères susceptibles d'être formés avec le dispositif laser de l'invention et leurs émissions lasers correspondantes sont notamment donnés dans les articles de B. FONTAINE et de J.J. EWING cités précédemment.

D'autres caractéristiques et avantages de l'invention ressortiront mieux de la description qui va suivre, donnée à titre illustratif et non limitatif en référence aux figures annexées, dans lesquelles :

- la figure 1, déjà décrite, représente les courbes de potentiel de Xe-Cl,

- la figure 2 représente une vue d'ensemble d'un laser continu à excimères, conforme à l'invention, la partie active du laser étant en perspective et en section transversale, et le recyclage des gaz étant représenté schématiquement,

- la figure 3 est une vue selon le plan III-III de la partie active du laser de la figure 2,

- la figure 4 est une vue en coupe longitudinale d'une variante de la partie active d'un laser continu selon l'invention,

- la figure 5 est une vue d'ensemble schématique d'un laser pulsé selon l'invention, et

- la figure 6 donne le spectre d'émission d'un mélange He/Xe/$Cl_2$ excité conformément au procédé de l'invention.

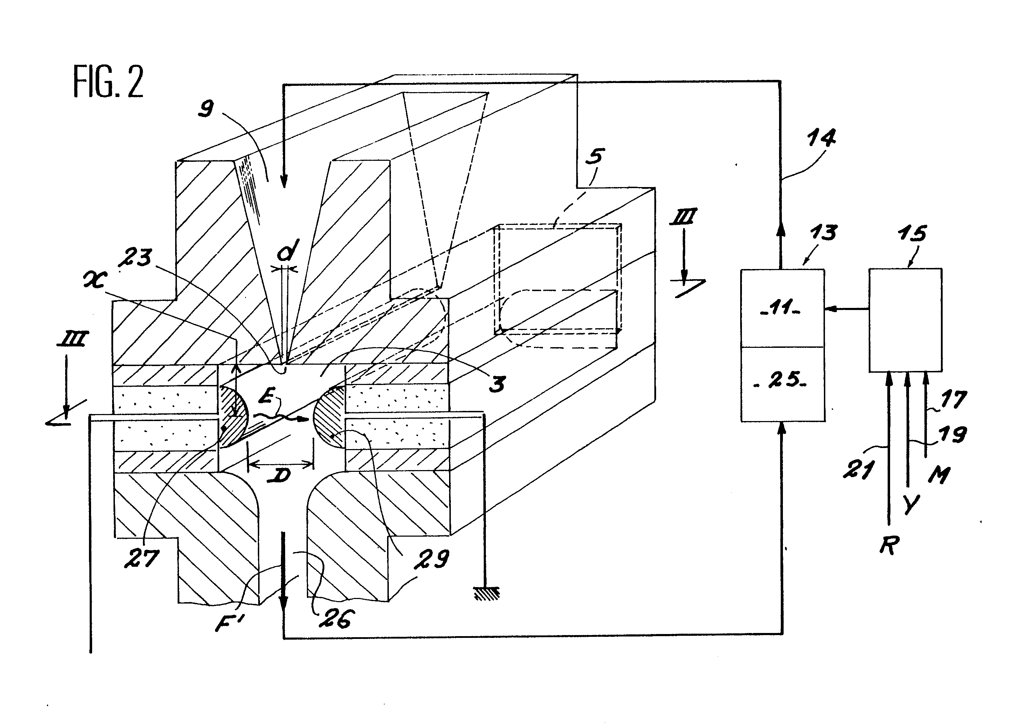

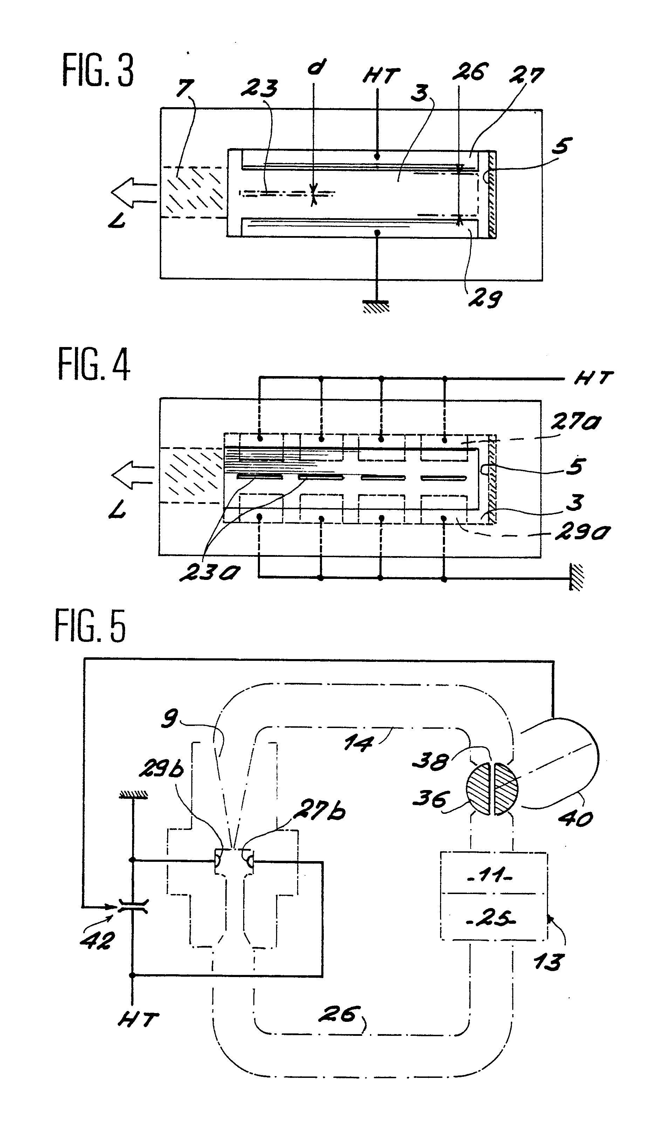

En se référant aux figures 2 et 3, un laser continu à excimères, conforme à l'invention, comprend une cavité résonnante 3 comportant à une première extrémité un miroir 5 à réflexion totale et à l'autre extrémité une fenêtre de sortie 7, par exemple en quartz, laissant passer 95% de la lumière émise dans la cavité 3.

Cette cavité laser, par exemple de forme parallélépipèdique, constitue une chambre de détente du mélange gazeux à l'origine de l'émission laser.·

Le gaz responsable de l'effet laser est introduit tout d'abord dans une enceinte de compression 9 à l'aide d'un étage de compression 11 d'un compresseur 13 présentant un débit de l'ordre de 5000 m3·h.

L'étage de compression 11 permet de comprimer le mélange gazeux précurseur de l'effet laser, à des pressions allant de·1 à 5 MPa. Une conduite 14 permet de véhiculer le mélange gazeux comprimé du compresseur vers la chambre de compression 9.

Le mélange gazeux à comprimer est stocké dans un réservoir mélangeur 15 en communication avec l'étage de compression du compresseur 13. Des conduites 17, 19 et 21 permettent d'alimenter le réservoir 15 en gaz ou vapeur R, gaz ou vapeur Y et gaz tampon.

Le mélange gazeux comprimé dans l'enceinte de compression 9 est introduit dans la chambre de détente 3 à l'aide d'une fente 23 de largeur $\underline{d}$ extrêmement faible, typiquement de 200 μm. Cette fente 23 est située dans le plan médian de la cavité 3.

Le mélange gazeux sortant de la chambre de compression 9 par la fente 23, subit une détente adiabatique supersonique dont le nombre de Mach varie de 10 à 100. A cet effet, la distance minimale D de la chambre de détente 3 doit être environ 20 fois plus grande que la largeur $\underline{d}$ de la fente 23. En outre, la pression initiale de la cavité 3 doit être très inférieure à celle régnant dans la chambre de compression 9. En particulier la pression dans la chambre de détente est inférieure à 135 Pa (<1 torr) et par exemple comprise entre 13 et 135 Pa ($10^{-1}$ à 1 torr).

Cette pression relativement faible de la chambre de détente 3 est réalisée par une pompe à vide constituant un second étage 25 du compresseur 13. Une conduite 26 débouchant dans la cavité 3, en regard de la fente 23, permet de véhiculer le gaz détendu de la cavité vers la pompe à vide 25.

Conformément à l'invention, la détente supersonique avec un nombre de Mach supérieur à 10 d'un mélange de gaz comprimé M + R + XY permet la formation d'un complexe de Van der Waals R-XY.

Des électrodes 27 et 29 connectées respectivement à la haute tension et à la masse, et logées à l'intérieur de la chambre de détente 3 permettent de créer une décharge électrique, symbolisée par la flèche E, orientée perpendiculairement à l'écoulement du mélange gazeux, symbolisé par la flèche F'. Cette décharge électrique E permet la transformation du complexe de Van der Waals R-XY en l'excimère RY*.

Pour R représentant Xe et XY représentant $Cl_2$, l'excimère obtenu est $XeCl^*$ dont les courbes de potentiel sont représentées sur la figure 1.

Le flux du gaz relativement élevé dans un laser selon l'invention, assure un renouvellement constant du milieu actif permettant ainsi une émission lumineuse continue. Celle-ci, représentée par la flèche L (figure 3), sort par la fenêtre 7, de la cavité laser.

Conformément à l'invention, la décharge électrique E est réalisée en aval de la fente 23 et dans une région où la densité (ou pression) du gaz est relativement faible, permettant ainsi l'utilisation d'une tension comprise entre 5 et 10 kV.

La distance x à laquelle est réalisée la décharge électrique E, par rapport à la fente 23, est typiquement de 4 mm. La distance x est environ 20 fois plus grande que la largeur de la fente 23.

Les électrodes 27 et 29 engendrant la décharge électrique E dans la zone froide (environ 10°K) de la chambre de détente 3, peuvent avoir toutes les formes possibles et en particulier la forme de deux cylindres pleins à base circulaire, dans le cas d'une fente continue 23.

Il est aussi possible, comme représenté sur la figure 4, d'utiliser plusieurs électrodes 27a reliées en parallèle à la masse et plusieurs électrodes 27a reliées en parallèle à la haute tension pour engendrer plusieurs décharges électriques. Ceci est en particulier le cas lorsque la communication entre la chambre de compression 9 et la chambre de détente 3 du laser est assurée par plusieurs fentes 23a ou trous situés en série dans le plan médian de la cavité 3. Cette multitude de fentes ou trous 23a permet la production de plusieurs jets de gaz comprimé disposés en série.

Conformément à l'invention, il est aussi possible de réaliser un laser pulsé ayant une fréquence de répétition des impulsions lasers supérieure à 1 kHz. Un tel laser est représenté schématiquement sur la figure 5.

Ce laser se différencie de celui décrit précédemment par l'utilisation d'une vanne à commande pulsée 36 située par exemple en aval de l'étage de compression 11 du compresseur 13. Cette vanne 36 est par exemple un tambour tournant équipé d'une fente 38 laissant passer le gaz comprimé lorsque cette fente est située dans l'axe de la conduite 14, mettant·en communication l'étage 11 du compresseur et la chambre de compression 9.

La vitesse de rotation de ce tambour 36 peut être contrôlée par un système connu du type tachymètre 40 envoyant un signal électrique approprié à un éclateur 42, du type thyristor, branché en parallèle entre les électrodes de décharge 27b et 29b reliées respectivement à la haute tension et à la masse.

La décharge de l'éclateur 42 conduit à une décharge électrique entre les électrodes 27b et 29b de façon pulsée, décharge synchronisée avec la vanne pulsée 36.

Un dispositif similaire à celui décrit en référence aux figures 2 et 3, à écoulement supersonique utilisant une tuyère circulaire de 200 μm de diamètre a permis d'observer l'émission de l'excimère XeCl* à 308 nm avec le mélange de gaz He/Cl₂/Xe dans un rapport 100/1/1.

La pression des gaz dans la chambre de compression 9 était de 14 bars et la pression régnant dans la chambre de détente 3 était de 13,5 Pa (10⁻¹ torr). La distance x entre la tuyère et la décharge électrique était de 4 mm, la largeur d de la tuyère était de 200 μm, ce qui correspond à un rapport de x/d de l'ordre de 20 et à un nombre de Mach de l'ordre de 24. La décharge électrique était assurée avec une tension de 6 kV.

Un exemple du spectre d'émission obtenu dans ces conditions expérimentales est représenté sur la figure 6.

L'excitation du complexe de Van der Waals Xe-Cl₂ formé lors de la détente, donne naissance sélectivement à l'excimère XeCl* dans son état électronique B, unique précurseur de l'émission laser à 308nm (correspondant à la transition électrique XeCl*(B,V≤10) → X (voir figure 1).

On peut remarquer ici que l'excimère XeCl* dans l'état B est formé dirêctement relativement froid (V≤10) contrairement à ce qui se passe avec les dispositifs de l'art antérieur dans lesquels la relaxation collisionnelle est nécessaire pour peupler les bas niveaux vibrationnels de l'état B à partir d'un mélange d'états vibroniques B et C.

La largeur spectrale à mi-hauteur de l'émission à 308nm, notée A, est de l'ordre de 10nm. Les autres raies observées peuvent être attribuées à des transitions électroniques de Cl₂, ce qui est notamment le cas de l'émission à 258nm. Cette émission à 258nm peut être fortement diminuée et devenir négligeable par rapport à l'émission laser à 308nm en augmentant la pression des gaz comprimés jusqu'à 20 bars et plus dans les conditions ci-dessus.

Un mélange de He/Hg/CH₃Cl dans un rapport 100/1/1 permet d'obtenir une émission de l'excimère HgCl*(B).

Le procédé d'obtention d'un excimère conformément à l'invention permet la réalisation de lasers continus ou impulsionnels à haute récurrence, contrairement aux procédés de l'art antérieur, dont les performances (rendement, puissance et la simplicité d'emploi, facilité de produire la décharge à faible tension) présentent de réels avantages.

**Revendications**

1. Procédé d'obtention d'un excimère apte à se dissocier chimiquement lors de sa désexcitation par une émission de lumière, caractérisé en ce qu'il comprend les étapes suivantes :
- compression d'un mélange gazeux R + XY + M avec R, XY et M identiques ou différents, et où R et XY sont choisis parmi un atome de gaz rare, un atome métallique et une molécule polyatomique et où M représente un gaz tampon,
- détente adiabatique supersonique du mélange comprimé avec un nombre de Mach au moins égal à 10, entraînant la formation d'un complexe de Van der Waals R-XY baignant dans le gaz tampon, l'énergie de liaison du complexe R-XY étant au moins égale à l'énergie de liaison de R-R et de XY-XY, et
- excitation directe du complexe de Van der Waals par décharge électrique (E) non assistée, conduisant à l'excimère RY*.

2. Procédé d'obtention selon la revendication 1, caractérisé en ce que la décharge électrique (E) est réalisée perpendiculairement à la direction d'écoulement (F') du mélange gazeux détendu.

3. Procédé d'obtention selon la revendication 1 ou 2, caractérisé en ce que la décharge électrique (E) est réalisée en aval de la détente dans une région (x) où le nombre de Mach est ≥ 10.

4. Procédé d'obtention selon l'une quelconque des revendications 1 à 3, caractérisé en ce que la compression du mélange gazeux est effectuée de 1 à 5 MPa.

5. Procédé d'obtention selon l'une quelconque des revendications 1 à 4, caractérisé en ce que R est choisi parmi Ar, Kr, Xe et Hg.

6. Procédé d'obtention selon l'une quelconque des revendications 1 à 5, caractérisé en ce que XY est une molécule polyatomique non polaire.

7. Procédé d'obtention selon l'une quelconque des revendications 1 à 6, caractérisé en ce que XY est une molécule polyatomique dont l'un au moins des atomes est un halogène.

8. Procédé d'obtention selon l'une quelconque des revendications 1 à 7, caractérisé en ce que XY est choisi parmi Cl₂, Br₂, F₂, CH₃X, CH₂X₂ ou C₂H₅X où X est choisi parmi Cl, Br et F.

7

9. Procédé d'obtention selon l'une quelconque des revendications 1 à 8, caractérisé en ce que M représente au moins un gaz rare.

10. Procédé d'obtention selon l'une quelconque des revendications 1 à 9, caractérisé en ce que R représente Hg, XY représente $CH_3Cl$ et M représente He.

11. Procédé d'obtention de l'excimère XeCl* selon la revendication 1, caractérisé en ce que R représente Xe, XY représente $Cl_2$ et M représente He.

12. Dispositif pour la mise en oeuvre du procédé selon l'une quelconque des revendications 1 à 11, caractérisé en ce qu'il comprend une chambre de compression (9), des moyens (11) pour comprimer le mélange gazeux R + XY + M dans la chambre de compression (9), une chambre de détente (3) communiquant par au moins une ouverture (23, 23a) avec la chambre de compression (9), des moyens (25) pour créer dans la chambre de détente (3) une pression inférieure à celle régnant dans la chambre de compression (9), la différence de pression entre les chambres de compression et de détente, la surface de l'ouverture et le volume de la chambre de détente étant tels que le mélange gazeux entrant dans la chambre de détente subisse une détente adiabatique supersonique avec un nombre de Mach au moins égal à 10, et des moyens (27, 29, 27a, 29a) pour produire une décharge électrique (E) dans la chambre de détente (3), en aval (x) de l'ouverture (23, 23a).

13. Laser de puissance émettant dans le visible ou l'ultraviolet comportant une cavité résonnante (3) contenant un excimère, caractérisé en ce que l'excimère est obtenu par le procédé conforme à l'une quelconque des revendications 1 à 11.

14. Laser de puissance émettant à 308 nm comportant une cavité résonnante (3) contenant l'excimère XeCl*, caractérisé en ce que l'excimère est obtenu par le procédé conforme à la revendication 11.

FIG. 1

FIG. 6

FIG. 2

0 275 777

FIG. 3

FIG. 4

FIG. 5

Office européen
des brevets

**RAPPORT DE RECHERCHE EUROPEENNE**

Numero de la demande

EP 87 40 2943

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | APPLIED PHYSICS LETTERS, vol. 36, no. 3, 1er février 1980, pages 185-187, American Institute of Physics, New York, US; B. FONTAINE et al.: "High specific power long-pulse supersonic flow XeCl laser at 308 nm" * Page 185 - page 186, colonne de gauche, ligne 12 * | 1,2,4-7 ,9,11- 14 | H 01 S 3/095 <br> H 01 S 3/223 |
| A | OPTICS COMMUNICATIONS, vol. 52, no. 5, 1er janvier 1985, pages 330-335, Elsevier Science Publishers B.V., (North-Holland Physics Publishing Division), Amsterdam, NL; U. HEFTER et al.: "An optically pumped supersonic iodine beam laser" * Figure 3; page 332, paragraphe: "Experimental" * | 1,12 | |
| A | SOVIET PHYSICS USP., vol. 29, no. 1, janvier 1986, pages 31-56, American Institute of Physics, New York, US; N.G. BASOV et al.: "Condensed- and compressed-gas lasers" * Paragraphes 1-6 * | 1-14 | |

DOMAINES TECHNIQUES RECHERCHES (Int. Cl.4)

H 01 S

Le présent rapport a été établi pour toutes les revendications

| Lieu de la recherche | Date d'achèvement de la recherche | Examinateur |
|---|---|---|
| LA HAYE | 06-04-1988 | FARNESE G.P. |